# EUROPEAN PATENT APPLICATION

(11) **EP 4 614 542 A1**
(43) Date of publication of application: **10.09.2025**
(21) Application number: 25305293.0
(22) Date of filing: 05.03.2025
(51) Int. Cl.: H01H 19/06, H02B 1/30, H01H 71/56

(54) **HANDLE OPERATING APPARATUS FOR SWITCHING DEVICE AND SWITCHING DEVICE**

(30) Priority: 07.03.2024 CN 202420445795 U
(71) Applicant: SCHNEIDER ELECTRIC INDUSTRIES SAS, 92500 Rueil-Malmaison (FR)
(72) Inventor: JI, Xuefeng, Shanghai, 201203 (CN); LV, Zewen, Shanghai, 201203 (CN); ZHANG, Haibo, Shanghai, 201203 (CN)
(74) Representative: Manitz Finsterwald Patent- und Rechtsanwaltspartnerschaft mbB

(57) **Abstract**

Embodiments of the disclosure provide a handle operating apparatus for a switching device and a switching device. The handle operating apparatus comprises: a handle assembly comprising a fixing part and a rotating part; a connecting member arranged in the cabinet door and coupled between the main shaft and the rotating part of the switching device; a first sealing member comprising a sealing gasket, an extension part, and a first sealing hole; and a second sealing member coupled between the inner wall of the cabinet door and the connecting member, and comprising an outer peripheral part and a second sealing hole, wherein the second sealing hole is adapted to form an interference fit with the connecting member at a second position to rotate synchronously with the connecting member, and a closed space is formed between the first sealing member and the second sealing member. Thereby, effective prevention can be achieved.

## Description

### FIELD

Example embodiments of the present disclosure relate generally to the field of switching apparatuses, and in particular to a handle operating apparatus for a switching device and a switching device.

### BACKGROUND

Currently, a rotating handle of a switching device provides a direct and physical interaction manner for an operator, so that the operator can control the switching device more easily and conveniently.

The functionality of the rotating handle is primarily achieved by an internal mechanical structure of the rotating handle. When the handle is rotated, the rotating handle drives an internal linkage mechanism or gear to rotate, thereby changing a state of the switching device. Therefore, by means of the rotation of the handle, the closed/open state of the device can be precisely controlled, achieving an expected operation.

However, conventional rotating handles cannot achieve the protection level of IPX7, thus, conventional rotating handles do not meet the overall performance and use safety requirements of the device.

### SUMMARY

The purpose of the present disclosure is to provide a handle operating apparatus for a switching device and a switching device to at least partially solve the above problems and other potential problems with conventional rotating handles.

In a first aspect of the present disclosure, a handle operating apparatus for a switch device is provided. The handle operating apparatus comprises: a handle assembly comprising a fixing part and a rotating part rotatable relative to the fixing part, and the fixing part comprising a protrusion coupled to a mounting hole of a cabinet door of the switching device, to allow the fixing part to be coupled to the cabinet door; a connecting member arranged in the cabinet door and coupled between a main shaft of the switching device and the rotating part, and adapted to be driven by the rotating part to drive a moving contact assembly of the switching device to rotate between a closed position and an open position; a first sealing member comprising a sealing gasket coupled between the cabinet door and the fixed part, an extension part extending axially from the sealing gasket into the cabinet body, and a first sealing hole formed at a tail end of the extension part, wherein the first sealing hole is adapted to form an interference fit with the connecting member at a first position of the connecting member to provide sealing; and a second sealing member coupled between an inner wall of the cabinet door and the connecting member, and comprising an outer peripheral part extending over a certain distance in an axial direction and a second sealing hole formed at one end of the outer peripheral part in the axial direction, wherein the second sealing hole is adapted to form an interference fit with the connecting member at a second position to rotate synchronously with the connecting member, wherein the first position and the second position are spaced apart in the axial direction by a predetermined distance, and the outer peripheral part is arranged to surround and contact the extension part to form a closed space between the first sealing member and the second sealing member.

In the embodiment according to the present disclosure, the first sealing member effectively prevents moisture from penetrating into the inside of the device from the outside. Meanwhile, the second sealing member provides a dual sealing based on the first sealing member. When the second sealing hole forms an interference fit with the connecting member at the second position and rotates synchronously with the connecting member, a higher level of sealing effect is achieved. In addition, a closed space is formed between the first sealing member and the second sealing member, so that even in the case of water leakage that may occur in the first sealing member, moisture cannot further penetrate into the interior of the device through the sealing of the second sealing member and the pressure in the closed space. Therefore, the first sealing member and the second sealing member work cooperatively to form a dual protection mechanism, greatly improving the protection level of the device, and ensuring the durable and stable operation of the device. Other benefits will be described below in conjunction with corresponding embodiments.

In some embodiments, the connecting member comprises a limiting part extending outward in a radial direction of the main shaft, the limiting part is arranged on one side of the second sealing member away from the first sealing member in the axial direction, and abuts against a periphery of the second sealing hole of the second sealing member, to press the second sealing member onto the inner wall of the cabinet door.

In some embodiments, the first sealing member further comprises: at least one annular protruding part protruding from a side of the sealing gasket facing the fixing part and adapted to be arranged in an annular groove of the fixing part.

In some embodiments, the connecting member comprises a coupling part adapted to be coupled to the rotating part to be driven by the rotating part, wherein the first position is arranged between the coupling part and the second position.

In some embodiments, the second sealing member further comprises: a first annular protrusion arranged around the second sealing hole, and arranged to abut against the first sealing member at an axial end.

In some embodiments, the first sealing member further comprises: a second annular protrusion formed around the first sealing hole and arranged to abut against the fixing part at an axial end.

In some embodiments, peripheries of the first sealing hole and the second sealing hole are thickened.

In some embodiments, the handle operating apparatus further comprises: a side operating handle coupled to a pair of moving contacts via the main shaft and adapted to be driven to rotate about the axial direction (A) of the main shaft.

In some embodiments, the handle operating apparatus further comprises: a front operating handle coupled to a pair of moving contacts via the main shaft and adapted to be driven to rotate about the axis direction (A) perpendicular to the main shaft.

In a second aspect of the present disclosure, a switching device is provided. The switching device comprises: a cabinet body comprising a cabinet door; a pair of static contacts and a pair of moving contacts, wherein the pair of static contacts are arranged to be electrically connected to a power supply side and a load side of the switching device respectively; and a handle operating apparatus according to the above first aspect, arranged on the cabinet door, and coupled to the pair of moving contacts through a main shaft, to drive the pair of moving contacts to respectively contact or disengage from the pair of static contacts.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF THE DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein
FIG. 1 illustrates an exploded view of a handle operating apparatus according to embodiments of the present disclosure;
FIG. 2 illustrates a cross-sectional view of a handle operating apparatus according to embodiments of the present disclosure;
FIG. 3 illustrates a schematic diagram of an assembly structure of a first sealing member according to embodiments of the present disclosure; and
FIG. 4 illustrates a schematic diagram of an assembling structure of a second sealing member according to embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to embodiments set forth herein. Rather, these embodiments are provided for a more thorough and complete understanding of the present disclosure. It should be understood that the accompanying drawings and embodiments of the present disclosure are only for illustrative purposes and are not intended to limit the scope of protection of the present disclosure.

In the description of embodiments of the present disclosure, the term "comprise" and similar terms should be interpreted as open inclusion, that is, "including but not limited to". The term "based on" should be interpreted as "based at least in part on". The term "an embodiment" or "the embodiment" should be interpreted as "at least one embodiment". The term "some embodiments" should be interpreted as "at least some embodiments". Other explicit and implicit definitions may also be included below. The terms "first", "second", etc. may refer to different or identical objects. Other explicit and implicit definitions may also be included below.

As mentioned briefly above, a conventional rotating handle cannot achieve the protection level of IPX7. In some specific environments, the rotating handle needs to be faced with humid environments such as sweat, rain, and the like, or even be soaked for a short time.

However, because the mechanical structure of a traditional rotating handle may have tiny gaps or voids, these gaps pose a risk to water-proof performance, potentially allowing moisture to enter and damage the internal components of the handle. In addition, although a conventional rotating handle is waterproof and packaged in a manner such as a plastic shell or a rubber washer, because the handle needs to perform a conventional rotating operation, long-term repetitive mechanical motion may cause damage or aging of the waterproof packaging, thereby affecting waterproof performance.

It should be noted that the IPX7 waterproof rating refers to an immersion protection, which will not enter the interior even if the device is immersed in water under prescribed conditions. This level of waterproofing is typically used for devices such as electronic measuring instruments, which can withstand being submerged in water at a depth of 1 meter for 30 minutes without being damaged and continue to operate normally. The protection level of IPX7 is part of the international protection (IP) standard, used to measure the resistance of a device to water ingress.

In order to solve or at least partially solve the described problems or other potential problems of the rotating handle of the conventional solutions, embodiments of the present disclosure provide a handle operating apparatus for a switching device and a switching device solution. In the handle operating apparatus, the handle assembly includes a fixing part and a rotating part which can rotate relative to the fixing part, and a protrusion of the fixing part is coupled to a mounting hole of a cabinet door of a switching device, so that the fixing part can be securely mounted on the cabinet door.

In addition, a connecting member is mounted inside the cabinet door, while the connecting member is coupled between the main shaft of the switching device and the described rotating part. When the rotating part is rotated, the connecting member drives the moving contact assembly of the switching device to rotate between a closed position and an open position.

Then, the sealing gasket of the first sealing member is coupled between the cabinet door and the fixed part, the sealing gasket having an extension part extending axially into the cabinet. A first sealing hole is formed at the tail end of the extension part. The first sealing hole forms an interference fit with the connecting member at the first position of the connecting member, so as to provide a first double sealing.

A second sealing member is coupled between the inner wall of the cabinet door and the connecting member, the second sealing member including an outer peripheral part extending over a certain distance in the axial direction and a second sealing hole formed at one end of the outer peripheral part in the axial direction. The second sealing hole forms an interference fit with the connecting member at a second position to rotate synchronously with the connecting member, thereby providing a second double sealing.

Further, the first position and the second position of the connecting member are spaced apart in the axial direction by a predetermined distance, and the outer peripheral part is arranged to surround and contact the extension part, thereby forming a closed space between the first and second sealing members. The closed space will form a back pressure inside, thereby effectively preventing the infiltration of water. In this way, the handle operating apparatus can provide a double sealing waterproof effect, and can ensure the normal operation of the handle operating apparatus.

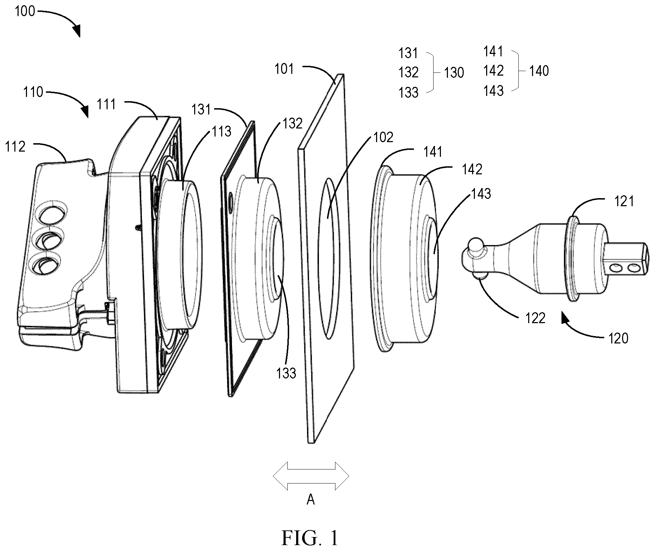

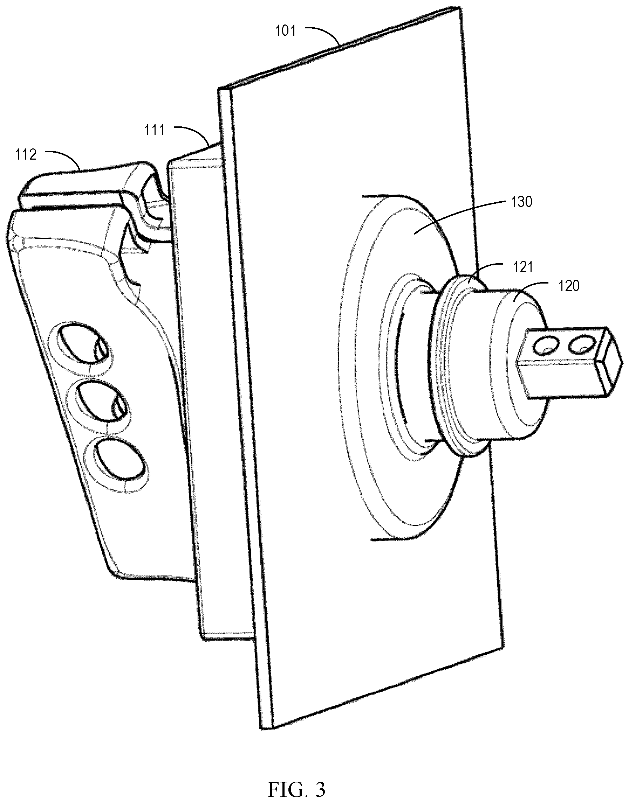

An exemplary configuration of handle operating apparatus 100 of the switching device will be described below with reference to FIGS. 1-4. A switching device according to embodiments of the present disclosure may include an isolating switch, and may also include any other suitable switching device that includes a moving contact and a static contact, in addition to the isolation switch. In the following, the concept of the present disclosure will be described mainly by taking the case that the switching device is an isolating switch as an example. It should be understood that, the case that the switching device is another device is also similar, and will not be described in detail hereinafter.

The switching device according to embodiments of the present disclosure include a cabinet body, a pair of static contacts, a pair of moving contacts, and a handle operating apparatus 100. The cabinet body includes a cabinet door 101. A pair of static contacts are arranged to be electrically connected to the power supply side or the load side of the switching device, respectively. The handle operation apparatus 100 is arranged on the cabinet door 101. A pair of moving contacts in the switching device are coupled to the handle operation apparatus 100 via a main shaft, and are respectively connected to or separated from a static contact by driving the pair of moving contacts. When the isolation switch is in a closed state (for example, in a connected state), the moving contact and the static contact are connected to form a path to enable a current to flow normally, so as to connect the power supply side and the load side. When the switching device is in an open state (for example, in a separated state or in a locked state), the moving contact rapidly separates and cuts off the current path.

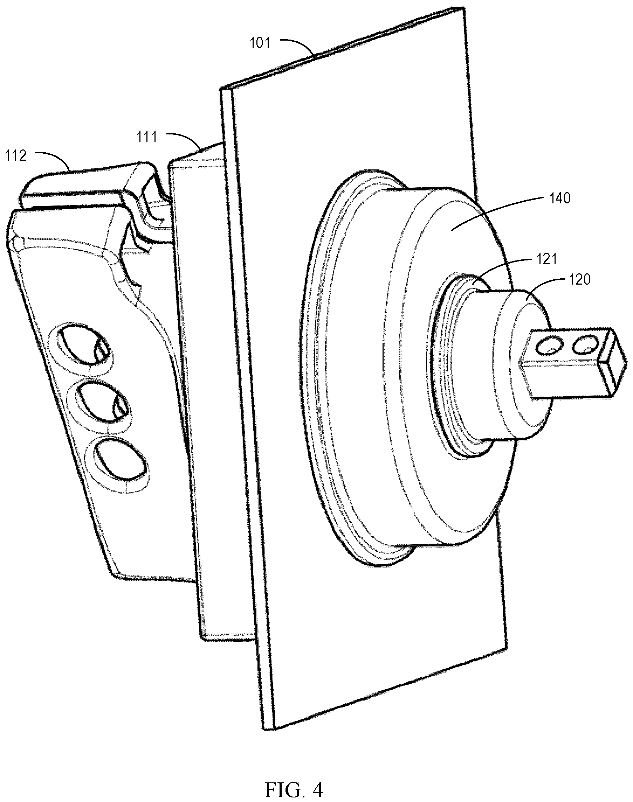

As shown in FIGS. 1 and 4, a handle operating apparatus 100 according to embodiments of the present disclosure generally include a handle assembly 110, a connecting member 120, a first sealing member 130, and a second sealing member 140. The handle assembly 110 is coupled between the cabinet door 101 and the connecting member 120 in a sealing manner via the first sealing member 130 and the second sealing member 140, thereby achieving a waterproof effect of double sealing.

Specifically, the handle assembly 110 includes a fixing part 111 and a rotating part 112. The two components work in cooperation so that the switching device can effectively perform opening and closing operations.

Further, the fixing part 111 is a main body structure of the handle assembly 110, which is a component mounted on the cabinet door 101 of the switching device. To achieve this mounting, the fixed part 111 includes a protrusion 113. The protrusion 113 may be coupled with the mounting hole 102 of the cabinet door 101. Therefore, the fixing part 111 can be firmly mounted on the cabinet door 101, and the fixing part 111 has certain stability and durability.

Further, the rotating part 112 is a component that mates with the fixing part 111, and can rotate relative to the fixing part 111. When the operator rotates the rotating part 112, it cooperates with the connecting member 120, allowing the switching device to toggle between open and closed operation states.

Continuing with the description of the connecting member 120, in the switching device, the connecting member 120 provides a connection between the main shaft of the switching device and the rotating part 112. The connecting member 120 enables the rotating part 112 to precisely drive the moving contact assembly of the switching device to rotate between the closed position and the open position.

Further, the connecting member 120 is arranged inside the cabinet door 101 and coupled with the main shaft of the switching device. This arrangement not only ensures the stability of the connecting member 120, but also enables the connecting member 120 to effectively complete its turning function. The coupling between the connecting member 120 and the main shaft enables the two to keep consistent in rotation, and the connecting member 120 can keep a correct direction and angle no matter in an open or closed state of the switching device.

On the other hand, the rotating part 112 and the connecting member 120 coupled thereto constitute a driving mechanism capable of converting the operating force of the operator on the handle (i. e. the rotating part 112) into the action of the switching device. Once the rotating part 112 is rotated, a force can be transmitted to the moving contact assembly of the switching device through the intermediary of the connecting member 120. The moving contact component rotates between the closed position and the open position, thereby implementing opening or closing of the switching device.

In brief, the connecting member 120 plays a role of a bridge in the operation of the switching device. The connecting member 120 connects the rotating part 112 and the main shaft of the switching device, and can effectively transfer the rotation power to the moving contact assembly of the switching device, thereby achieving the instantaneous rotation of the switching device, and ensuring the smooth operation and the reliability performance of the switching device.

Continuing the description of the first sealing member 130 mentioned above, the first sealing member 130 is a component for the device to remain completely enclosed. The first sealing member 130 includes a sealing gasket 131, an extension part 132 extending axially from the sealing gasket 131 into the cabinet body, and a first sealing hole 133 formed at a tail end of the extension part 132.

Further, the sealing gasket 131 is coupled between the cabinet door 101 and the fixed part 111, so that the contact surface between the cabinet door 101 and the fixed part 111 forms a layer of sealing to prevent external elements such as air, dust or moisture from entering the interior of the device via this interface. By stable coupling, the sealing gasket 131 can provide effective blocking of environmental factors, and provide safety protection for internal components of the device.

Secondly, the extension part 132 further enhances the sealing performance, and prevents vibration caused by the operation of the device from affecting the sealing gasket 131. In this way, the extension part 132 provides sustained and robust protection to internal components even when the device is operating for extended periods of time or in harsh environments.

In addition, the first sealing hole 133 forms an interference fit with the connecting member 120 at the first position of the connecting member 120 to provide a sealing. In other words, the first position of the connecting member 120 and the first sealing hole 133 can form a complete sealing system, effectively preventing any possible leakage.

Similarly, the second sealing member 140 works together with the connecting member 120 and the inner wall of the cabinet door 101 to provide the second heavy sealing assurance.

Further, the second sealing member 140 is coupled between the inner wall of the cabinet door 101 and the connecting member 120. The second sealing member 140 plays a safeguard role to prevent any leakage caused by the relative rotation between the first sealing hole 133 and the connecting member 120.

Secondly, the second sealing member 140 includes an outer peripheral part 142 extending over a certain distance in an axial direction. The extension part 132 can enable the second sealing member 140 to completely match the connecting member 120 that is matched with the second sealing member 140, thereby further improving the sealing effect.

In addition, the second sealing member 140 includes a second sealing hole 143 located at one axial end of the outer peripheral part 142. The second sealing hole 143 is a structured to form an interference fit with the connecting member 120 at the second position of the connecting member 120. By means of the tight fit, the second sealing member 140 can rotate synchronously with the connecting member 120. In this way, even during the continuous operation of the connecting member 120, the second sealing hole 143 is always maintained in an ideal state (for example, the second sealing member 140 and the connecting member 120 are in a relatively static state), thereby effectively preventing leakage.

Therefore, the second sealing member 140 can ensure stable operation of the device under various working environments, thereby providing double and complete sealing protection for the switching device. In this way, the device can still maintain its excellent performance in long-term use, thereby significantly improving the reliability and service life of the device.

In addition, in the entire handle operation apparatus 100, the first position and the second position of the connecting member 120 are spaced apart by a predetermined distance and distributed along the axial direction, so that the movement of the entire connecting member 120 can be performed accurately and stably, and an effective sealing effect is formed at the respective positions.

The outer peripheral part 142 of the second sealing member 140 is arranged to surround and contact the extension part 132 of the first sealing member 130, forming a stable support structure. In this way, not only robust coupling of components is ensured, but also stability and reliability of the overall device are very beneficial. This arrangement also greatly simplifies the overall assembly process and produces an effective sealing effect.

Furthermore, with such an arrangement, a closed space 150 is formed between the first sealing member 130 and the second sealing member 140. This space provides an additional protection layer for the entire handle operating apparatus 100. The negative pressure within the enclosed space 150 may effectively prevent dust, moisture, or other external elements from entering the interior of the device via between the first sealing hole 133 and the connecting member 120. In this way, in an actual working environment, regardless of the environment, the interior of the device can keep clean, thereby ensuring permanent and stable working performance.

It should be noted that, the first position and the second position may be any positions of the connecting member 120 in the axial direction, as long as they can satisfy the above double sealing effect, which is not specifically limited in embodiment of the present disclosure.

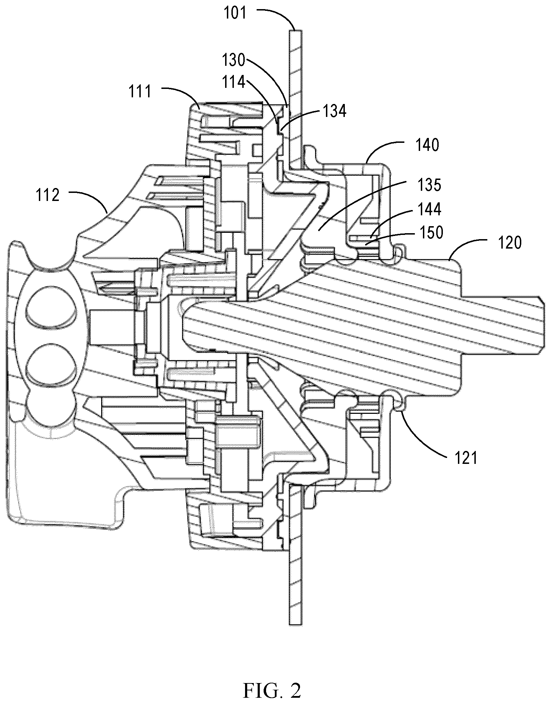

As shown in FIGS. 1 and 2, continuing with the description of the connecting member 120 mentioned above, in some embodiments, the connecting member 120 includes a limiting part 121 extending outward in a radial direction of the main shaft. The limiting part 121 is located axially on the connecting member 120 on the side of the second sealing member 140 that is further away from the first sealing member 130. In order to ensure that the second sealing member is always kept at a correct position during the assembly and operation of the connecting member 120, an effective sealing effect is achieved with the inner wall of the cabinet door 101.

Further, the limiting part 121 can abut against the periphery of the second sealing hole 143 of the second sealing member 140, so that the second sealing member 140 can be effectively pressed against the inner wall of the cabinet door 101 in practical operation. The second sealing member 140 also ensures a complete sealing effect while being pressed by the pressing of the limiting part 121. In this way, not only the sealing effect is improved, but also the overall stability and service life of the device are improved. Meanwhile, the inner side wall of the second sealing member 140 close to the cabinet door 101 abuts against the extension part 132 of the first sealing member 130, so as to further ensure the sealing effect.

In some embodiments, the connection piece 120 includes a coupling part 122. The coupling part 122 may be directly coupled to the rotating part 112 to enable transfer of mechanical energy. By providing the driving force to the rotating part 112, the connecting member 120 is rotated.

Further, the first position is arranged between the coupling part 122 and the second position, and by means of the cooperation between the coupling part 122 and the rotating part 112, and the cooperation between the first position and the second position, the whole handle operation apparatus 100 can always keep an effective and accurate sealing effect during the movement. Thus, the stability of the device is further improved, and the overall working efficiency is further improved.

Continuing with the description of the first sealing member 130 mentioned above, in some embodiments, the first sealing member 130 includes at least one annular protruding part 134 to maximize seal and stability of the first sealing member 130.

Specifically, the annular protruding part 134 protrudes from a side of the sealing gasket 131 facing the fixing part 111. Therefore, the annular protruding part 134 can strengthen the sealing gasket 131 in a more effective manner while achieving the sealing function, so as to maintain the balance and stability of the connection. The annular protruding part 134 may enable the first sealing member 130 to maintain good sealing performance not only in a low pressure environment, but also in a high pressure environment.

In addition, the annular protruding part 134 is arranged in the annular groove 114 of the fixing part 111. By means of this precise fit, a perfect fit between the protruding part and the groove part is achieved, so that the first sealing member 130 can be connected between the fixing part 111 and the cabinet door 101 more stably, and is not displaced due to the vibration of the device or the influence of an external force. This greatly improves the operational stability of the device and reduces the potential for failure due to operational instability.

Therefore, the mutual cooperate between the annular protruding part 134 of the first sealing member 130 and the fixing part 111 provides strong support for the entire device, protecting the device from an optimal operation state under various operation conditions, this satisfies the requirements of the device in various operation environments, and ensures long-term stable operation of the device.

As shown in FIG. 2, in some embodiments, the first sealing member 130 further includes a second annular protrusion 135. This part is formed around the first sealing hole 133, which provides additional assurance of the operational performance of the first sealing member 130.

Further, the second annular protrusion 135 is arranged to abut against the fixing part 111 at an axial end. Therefore, the connection between the first sealing member 130 and the fixing part 111 can be further strengthened, so that the first sealing member 130 can play a more stable supporting role during mechanical movement. As a result, the first sealing member 130 can still be made secure in its stability in the axial direction when subjected to vibration or pressure changes under complicated conditions.

In addition, the second annular protrusion 135 closely abuts against the fixing part 111, so that the dynamic pressure change of air caused by the movement of the device can be avoided during the operation, thereby avoiding the degradation of sealing performance caused thereby, and ensuring the stable operation of the device.

In some embodiments, the second sealing member 140 includes a first annular protrusion 144. The first annular protrusion 144 is arranged around the second sealing hole 143, and cooperates with the first sealing member 130 to further enhance stability of the device and enhance mechanical performance in a dynamic environment.

In addition, the first annular protrusion 144 contacts the axial end of the first sealing member 130. By this arrangement, the first annular protrusion 144 forms a closed space 150 between the first sealing member 130 and the second sealing member 140 and the connecting member 120. As described above, the pressure within the enclosed space 150 may effectively prevent dust, moisture, or other external elements from entering the interior of the apparatus via between the first sealing hole 133 and the connection 120. Therefore, a description of the closed space 150 will be omitted herein.

Further, the second sealing member 140 includes an abutting part 141 that extends parallel to the direction of the inner wall of the cabinet door 101, so as to achieve a tight abutment with the inner wall and improve the sealing effect therebetween.

In some embodiments, peripheries of the first sealing hole 133 and second sealing hole 143 are thickened. which actually increases the compression resistance and wear resistance of both sealing holes. Thus, the lifespan of the two sealing holes is significantly extended, so that the degradation of sealing performance caused by abrasion can be effectively prevented during a long-lasting operation.

In addition, peripheries of the first sealing hole 133 and the second sealing hole 143 are thickened, so as to optimize the cooperation of the first sealing hole 133 and the second sealing hole 143 with other components, so as to achieve a better sealing effect. The thickened sealing hole can bear the pressure more firmly when contacting the annular protrusion 144 or other components (such as the connecting member 120), thereby providing a higher sealing efficiency.

In some embodiments, the handle operating apparatus 100 may be a side operating handle or a front operating handle. That is, the handle operation apparatus 100 can be applied to a handle for front operation as well as a handle for side operation.

For example, for a side operating handle, the side operating handle is coupled to a pair of moving contacts via a main shaft to enable open and close control operation of the switching device. By making close connections between the handle and the main shaft, and between the main shaft and the moving contact, not only the control strength for operating the handle can be enhanced, but also the operator can feel and judge the running state of the device more accurately.

Secondly, the side operating handle is adapted to be driven to rotate around the axis direction A of the main shaft. In order to enlarge the operation and control range of the operating handle, the side operating handle can be controlled according to the intuitive action of the operator, so that the operation thereof is more natural and smooth, and the quickness and accuracy of the operation are improved.

Similarly, for the front operating handle, the front operating handle is coupled to a pair of moving contacts via a main shaft, this arrangement allows the handle, the main shaft, and the moving contacts to form a tight connection. In this way, any pushing or rotating operation performed on the main shaft and the moving contact by the handle can be accurately and inaccurately transmitted to the device, thereby achieving operation accuracy.

Then, the front operating handle is adapted to be driven in rotation about an axis direction A perpendicular to the main shaft. This manner of rotation makes maximum use of the force of the operator, making it easier and more accurate to control the device. As far as the operator is concerned, the rotation in the direction A perpendicular to the axis of the main shaft is more intuitive and natural, and more ergonomic, resulting in greatly increased comfort and convenience during operation.

Therefore, the side operating handle and the front operating handle are intended to provide an effective means for a driving source (such as an operator or a mechanical device), so that the driving source can smoothly drive the rotation of a critical components (such as a main shaft). In this way, the whole operation process is accurate and smooth, thereby improving the operation efficiency and accuracy of the switching device.

In embodiment of the present disclosure, the handle operation apparatus 100 is assembled on an electric cabinet, and the whole device is immersed into water with a depth of 1 meter to perform handle operation. If the duration lasts for 30 minutes, no water ingress occurred inside the device. Thus, the handle handling apparatus 100 may meet the protection class of IPX7.

Implementations of the present disclosure have been described above. The above description is illustrative, not exhaustive, and is not limited to the disclosed implementations. Many modifications and variations will be apparent to those of ordinary skill in the art without departing from the scope and spirit of the described implementations. The terminology used herein is chosen to best explain the principles, practical applications, or improvements to the technology in the market, or to enable other persons of ordinary skill in the art to understand the various implementations disclosed herein.

## Claims

1. A handle operating apparatus for a switching device, **characterized by** comprising:
a handle assembly (110) comprising a fixing part (111) and a rotating part (112) rotatable relative to the fixing part (111), and the fixing part (111) comprising a protrusion (113) coupled to a mounting hole (102) of a cabinet door (101) of the switching device, to allow the fixing part (111) to be coupled to the cabinet door (101);
a connecting member (120) arranged in the cabinet door (101) and coupled between a main shaft of the switching device and the rotating part (112), and adapted to be driven by the rotating part (112) to drive a moving contact assembly of the switching device to rotate between a closed position and an open position;
a first sealing member (130) comprising a sealing gasket (131) coupled between the cabinet door (101) and the fixed part (111), an extension part (132) extending axially from the sealing gasket (131) into the cabinet body, and a first sealing hole (133) formed at a tail end of the extension part (132), wherein the first sealing hole (133) is adapted to form an interference fit with the connecting member (120) at a first position of the connecting member (120) to provide sealing; and
a second sealing member (140) coupled between an inner wall of the cabinet door (101) and the connecting member (120), and comprising an outer peripheral part (142) extending over a certain distance in an axial direction and a second sealing hole (143) formed at one end of the outer peripheral part (142) in the axial direction, wherein the second sealing hole (143) is adapted to form an interference fit with the connecting member (120) at a second position to rotate synchronously with the connecting member (120),
wherein the first position and the second position are spaced apart in the axial direction by a predetermined distance, and the outer peripheral part (142) is arranged to surround and contact the extension part (132) to form a closed space (150) between the first sealing member (130) and the second sealing member (140).

2. The handle operating apparatus of claim 1, **characterized in that** the connecting member (120) comprises a limiting part (121) extending outward in a radial direction of the main shaft, the limiting part (121) is arranged on one side of the second sealing member (140) away from the first sealing member (130) in the axial direction, and abuts against a periphery of the second sealing hole (143) of the second sealing member (140), to press the second sealing member (140) onto the inner wall of the cabinet door (101).

3. The handle operating apparatus of claim 1, **characterized in that** the first sealing member (130) further comprises:
at least one annular protruding part (134) protruding from a side of the sealing gasket (131) facing the fixing part (111) and adapted to be arranged in an annular groove (114) of the fixing part (111).

4. The handle operating apparatus of claim 1, **characterized in that** the connecting member (120) comprises a coupling part (122) adapted to be coupled to the rotating part (112) to be driven by the rotating part (112), wherein the first position is arranged between the coupling part (122) and the second position.

5. The handle operating apparatus of any of claims 1-4, **characterized in that** the second sealing member (140) further comprises:
a first annular protrusion (144) arranged around the second sealing hole (143), and arranged to abut against the first sealing member (130) at an axial end.

6. The handle operating apparatus of any of claims 1-4, **characterized in that** the first sealing member (130) further comprises:
a second annular protrusion (135) formed around the first sealing hole (133) and arranged to abut against the fixing part (111) at an axial end.

7. The handle operating apparatus of any of claims 1-4, **characterized in that** peripheries of the first sealing hole (133) and the second sealing hole (143) are thickened.

8. The handle operating apparatus of any of claims 1-4, **characterized in that** the handle operating apparatus further comprises:
a side operating handle coupled to a pair of moving contacts via the main shaft and adapted to be driven to rotate about the axial direction (A) of the main shaft.

9. The handle operating apparatus of any of claims 1-4, **characterized in that** the handle operating apparatus further comprises: a front operating handle coupled to a pair of moving contacts via the main shaft and adapted to be driven to rotate about the axis direction (A) perpendicular to the main shaft.

10. A switching device, **characterized by** comprising:
a cabinet body comprising a cabinet door (101);
a pair of static contacts and a pair of moving contacts, wherein the pair of static contacts are arranged to be electrically connected to a power supply side and a load side of the switching device respectively; and
a handle operating apparatus of any of claims 1-9, arranged on the cabinet door (101), and coupled to the pair of moving contacts through a main shaft, to drive the pair of moving contacts to respectively contact or disengage from the pair of static contacts.
